# EUROPEAN PATENT APPLICATION

(11) **EP 0 870 740 A1**
(43) Date of publication of application: **14.10.1998**
(21) Application number: 98250126.4
(22) Date of filing: 07.04.1998
(51) Int. Cl.: C04B 26/04, C04B 14/18

(54) **Improvements in perlite materials**

(30) Priority: 10.04.1997 GB 9707239
(71) Applicant: S & B Holding GmbH, 45772 Marl (DE)
(72) Inventor: Bock, Gunther Karl-Georg, 63906 Erlenbach/Main (DE); Dirken, Petrus Johannes, Gloucestershire GL54 4JR (GB); Paul, Hans Joachim Hermann, 97877 Wertheim (DE)
(74) Representative: Weisse, Jürgen, Dipl.-Phys.

(57) **Abstract**

An improved expanded perlite composition having a bulk density below about 150kg/m3 is useful for building insulation especially for flooring and comprises a binder in an amount of 15 to 35wt% of the composition, where the binder is a mixture of wax and 5 to 15wt% of ethylene-vinyl acetate copolymer. The composition offers improved physical properties and improved production methods.

## Description

The present invention concerns improvements in perlite materials, and more especially concerns improvements in expanded perlite compositions.

Expanded perlite is a well-known material and is widely used as an insulating material in domestic and commercial or industrial buildings. One particular product that is marketed by a number of manufacturers is described in German patent number DE 3714287, and consists of expanded perlite bound with 30 to 20wt% of a binder which is a mixture of 65 to 75wt% paraffin wax and 35 to 25wt% of natural resin (rosin). Although this product has met with considerable commercial success, it is believed that there remains a need for an improved product which offers the possibility of improved processing.

It is important to understand that in several plants for the manufacture of such known perlite composition, the coating of the expanded perlite is carried out by spraying onto a mass of expanded perlite at ambient temperature, the binder in liquid form, at about 115 to 120°C, followed by tumbling in a drum mixer to ensure distribution of the binder. The homogenised composition is then cooled before being filled into bags. It has been found that the rosin component of the liquid binder, which needs to be stored in bulk at the spraying temperature, has a great tendency to oxidise or thermally decompose, causing discolouration and frequent blockages in tanks and pipes, and interruption of the process. It is an aim of the present invention, therefore, to provide new compositions and processes which avoid the disadvantages of such known process.

Since making the present invention, we have become aware of some earlier work by Nippon Oil published in Japanese unexamined patent application numbers 49-106523 and 49-126719. In those publications a material which is termed "perlite" or "pearlite" is mixed with a binder consisting of two or more of polyolefin resins, waxes and tackifier resins, and some examples are given of binders which are wax and EVA. We have discovered that the Japanese pearlite is manufactured from obsidian, and has very different characteristics from those of European perlite which is based on expanding perlite mined in Greece. The bulk density of Japanese pearlite is about 160kg/m³ and the product after coating has a bulk density of 250kg/m³. A key requirement in the Japanese technology is the creation and retention of voids, creating a product which is not very strong and only suitable for wall panels, ceiling panels *etc*. In marked contrast, the preferred products of the present invention have a bulk density of approximately half that of the Japanese material, that is about 130kg/m³ but has greatly improved strength such that it can withstand use in flooring. We believe that at least part of the improvement results from the impregnation of a significant proportion of the binder into the perlite particles, whereas the Japanese patents are directed to coating the surface of the pearlite with the minimum of binder, thus achieving agglomeration. Other differences between these prior documents and the present invention will readily be seen by the man skilled in the art.

The invention provides a new expanded perlite composition suitable for use in flooring and consisting of expanded perlite particles and a binder, characterised in that the perlite particles form 65 to 85wt% of the composition and the binder forms 35 to 15wt% of the composition, the binder comprises a mixture of 85 to 95wt% wax and 5 to 15wt% of an ethylene-vinyl acetate copolymer ("EVA"), and further characterised in that the bulk density of the composition is below 150kg/m³, preferably about 130kg/m³.

It is recognised that mixtures of wax and EVA copolymers are well known as hot melt adhesives, for example for book-binding. However, such adhesive compositions are generally of different proportions to those of the present invention, and additionally contain a tackifier which is not an essential component in the present invention.

The wax to be used is preferably a hard paraffin wax, suitably of melting range 62 to 66°C. Such waxes are suitable technically and are relatively inexpensive. However, other waxes including microcrystalline waxes may be used alone or in admixture with the preferred paraffin wax.

The expanded perlite is suitably of 0 to 6mm particle size. In certain circumstances, it may be desirable to incorporate perlite dust or fines, or some other filler material. It may be preferred to pre-treat the expanded perlite by spraying the particles with a silicone, for example dimethyl polysiloxane, which has the effect of reducing the water content and improving the adhesion between the expanded perlite and the binder. In general, the amount of silicone is less than 1% by weight of the expanded perlite. The improved process of the present invention may avoid the need to use such silicones.

The EVA may be obtained from a number of commercial sources and preferably contains 8 to 28wt% of vinyl acetate, more preferably 15 to 26wt% of vinyl acetate. If the vinyl acetate content of the EVA is too high, for example above about 30wt%, the EVA does not disperse effectively in the wax. Suitable EVA copolymers have melt indices of about 300 to about 500, and ring and ball softening points of about 85°C to about 100°C. A preferred EVA product is that marketed as "ELVAX" (Registered Trade Mark) Grade 310, by Du Pont, although other suppliers of suitable EVA copolymers include Hoechst AG and ATOCHEM SA. The EVA may contain other polymerisation components provided that these do not adversely affect the properties of the product.

The binder composition may include other components which do not adversely affect the properties of the final composition, or offer some improvement in properties. For example, it may be desirable to include a colouring material such as a fat-soluble dye in an amount of 0.01 to 0.05wt% of the final composition. Such a dye gives colour to the wax and also to the white expanded perlite and can help to monitor the content of binder which was sprayed onto the expanded perlite.

Desirably, the EVA is dosed in particle form, with stirring into the molten wax. We have found that such dosing avoids the formation of lumps in the binder composition, and generally is much easier to operate than the admixing of natural resin, which tends to pressure agglomerate in the sacks of resin. A further, unexpected, advantage of the novel binder compositions is that they can be used at much higher temperatures than is possible with the natural resin, for example at 150 °C, without blockages and with the result that the binder has reduced viscosity to permit better spraying. In turn, this permits a better distribution of the binder and a thinner wax layer on the surface of the perlite grains. This is important to reduce the combustibility of the product.

The expanded perlite composition is suitably prepared by spraying the novel binder onto a mass of expanded perlite, and homogenising by tumbling in a drum mixer for 30 to 60 seconds, whereby a substantial proportion of the binder is absorbed into the expanded perlite product.

The invention therefore also provides a method for the production of the improved expanded perlite composition, comprising treating expanded perlite with an amount of the novel binder specified above to give a weight ratio of perlite to binder of from 2.28 to 4:1, and homogenising, if necessary, the resulting mixture.

The process of the invention offers improved flexibility in its application to existing plants without requiring modification of the plant and consequential capital expenditure.

We have found that in addition to the process improvements described above, the composition of the invention offers a slightly stronger product when tested following DIN53421, when compared to the existing wax/natural resin-bound product which is sold under the trade name "NIVOPERL". That is, the compressive strain ("Druckspannung") test yields results of 0.21 N/mm² for the composition of the invention whereas the results of NIVOPERL are 0.18N/mm². The composition of the invention, despite the binder containing relatively high quantities of wax, passes the German standard combustibility test DIN4102 (6.2 Baustoffklasse B2) without the requirement for any added fire retardant.

The composition of the invention may be used in conventional manner. For example, a layer of up to 6cm of the composition may be laid on a concrete floor and wood fibre floor boards laid on top of the composition. The act of walking over the boards, levels and compacts the perlite composition to provide an effective insulated floor. For some uses, layers of up to 1 to 2 metres thickness may be used. In general, if the thickness of the layer is greater than about 6cm, it is recommended to use a vibrating compactor to form the compacted mass of insulation.

The invention will now be described by way of example only.

### EXAMPLE

A binder composition is prepared by melting 2160kg of paraffin wax and heating it to 150°C. The molten wax is stirred with a paddle stiffer. 175kg (that is, 7 x 25kg bags) of "ELVAX" 310 EVA granules are slowly dosed into the molten wax and stirred for 30 minutes, together with 130g of Hoechst Fat Yellow dye and 220g Hoechst Fat Blue dye.

The prepared binder is sprayed at an amount of 30kg binder per m³ of 0 to 6mm expanded perlite having a bulk density of 90kg/m³. The resulting mixture is homogenised by tumbling in a drum mixer for 30-60 seconds. The resulting expanded perlite composition is a pleasant green colour and shows excellent results in practice, being easy to use and offering excellent insulation.

## Claims

1. An expanded perlite composition suitable for use in flooring and consisting of expanded perlite particles and a binder, characterised in that the perlite particles form 65 to 85wt% of the composition and the binder forms 35 to 15wt% of the composition, the binder comprises a mixture of 85 to 95wt% wax and 5 to 15wt% of an ethylene-vinyl acetate copolymer ("EVA") and further characterised in that the bulk density of the composition is below 150kg/m³.

2. A composition according to claim 1, wherein the bulk density of the composition is about 130kg/m³.

3. A composition according to claim 1 or 2, wherein in the binder, the EVA has a melt index of from about 300 to 500.

4. A composition according to claim 1, 2, or 3, wherein in the binder, the vinyl acetate content of the EVA is from 15 to 26wt%.

5. A composition according to any one of claims 1 to 4, wherein in the binder, the EVA has a ring and ball softening point of about 85°C to about 100°C.

6. A composition according to any one of claims 1 to 5, comprising also a fat-soluble dye dissolved in the binder.

7. A flooring comprising a perlite composition according to any one of the preceding claims.

8. A method for the production of an improved expanded perlite composition according to any one of the preceding claims, comprising treating expanded perlite with an amount of a binder comprising a mixture of 85 to 95wt% wax and 5 to 15wt% of an ethylene-vinyl acetate copolymer to give a weight ratio of perlite to binder of from 2.28 to 4:1, and homogenising, if necessary, the resulting mixture.

9. A method according to claim 8, wherein the perlite is at or near ambient temperature and the binder is at a temperature from 120°C to 150°C.

10. A method according to claim 9, wherein the binder is sprayed onto the expanded perlite and the mixture is tumbled to homogenise.
